# EUROPEAN PATENT APPLICATION

(11) **EP 1 050 797 A1**
(43) Date of publication of application: **08.11.2000**
(21) Application number: 99410047.7
(22) Date of filing: 03.05.1999
(51) Int. Cl.: G06F 9/312

(54) **Execution of instructions in a computer program**

(71) Applicant: STMicroelectronics S.A., 94250 Gentilly (FR)
(72) Inventor: Bouvier, Stéphane, 38330 Saint-Ismier (FR)
(74) Representative: Driver, Virginia Rozanne

(57) **Abstract**

So-called expanded instructions are described which each include a command identifier and a bit sequence acting as a register mask. A decoder receives these instructions and generates a sequence of similar commands from each expanded instruction, the nature of the command being defined by the command identifier and each command in the sequence identifying a different register derived from the register mask. A computer system for using these expanded instructions includes a plurality of parallel execution units operable to perform register manipulations responsive to the commands.

## Description

The present invention relates to a method of executing instructions in a computer program, and to a computer system therefor.

In a computer system it is sometimes required to execute instructions which require the same operation to be carried out on a number of different registers. This can be done by writing a program sequence which includes the same instruction a number of different times, each instruction identifying a different register. This clearly however is wasteful of code and unnecessarily increases the number of instructions required to be held in the program memory.

To avoid this, the present invention provides a computer system comprising: a plurality of registers for holding data items; a memory holding a computer program consisting of a sequence of instructions, at least some of said instructions being expanded instructions which include a command identifier and a bit sequence acting as a register mask; a decoder arranged to receive said instructions and to generate a sequence of similar commands from each expanded instruction, the nature of the command being defined by the command identifier and each command in the sequence identifying a different one of said register derived from the register mask; and a plurality of parallel execution units operable to perform register manipulations responsive to said commands.

Thus, the computer system described herein has certain instructions (for example PUSH, POP) which are to be expanded into a series of stores of loads. The registers to be stored or loaded are defined in a field of the instruction which holds a so-called immediate value. This immediate value acts as the register mask.

In order to identify the registers required for each command in the sequence, the decoder can comprise a bit position detection circuit which includes an edge detector for detecting the position of a first "1" bit in the bit sequence and outputting that position to identify said registers. The decoder can additionally include circuitry for removing from the bit sequence each first 1 bit after it has been detected and supplying to the edge detector a new bit sequence from which the last detected first 1 bit has been removed. In the described embodiment, the bit removing circuitry comprises a one hot circuit and an AND gate, the AND gate receiving as one input an inverted output from the one hot circuit and as the other input the last bit sequence in which the first 1 bit was detected.

For a better understanding of the present invention and to show how the same may be carried into effect, reference will now be made by way of example to the accompanying drawings in which:
Figure 1 is a block diagram of a computer system;
Figure 2 illustrates three different instruction modes;
Figure 3 illustrates different formats for instructions in GP32 mode;
Figure 4 illustrates different formats for instructions in GP16 mode;
Figure 5 illustrates formats for micro-instructions for the data units and address units;
Figure 6 illustrates how an immediate value is used as a register mask in expanding instructions; and
Figure 7 illustrates circuitry for identifying registers from an immediate value in an instruction.

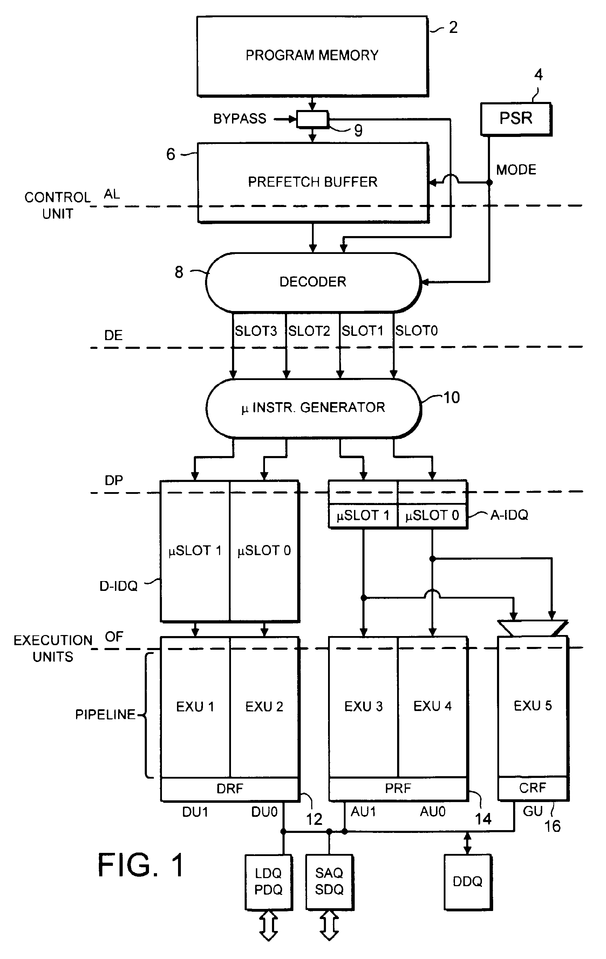

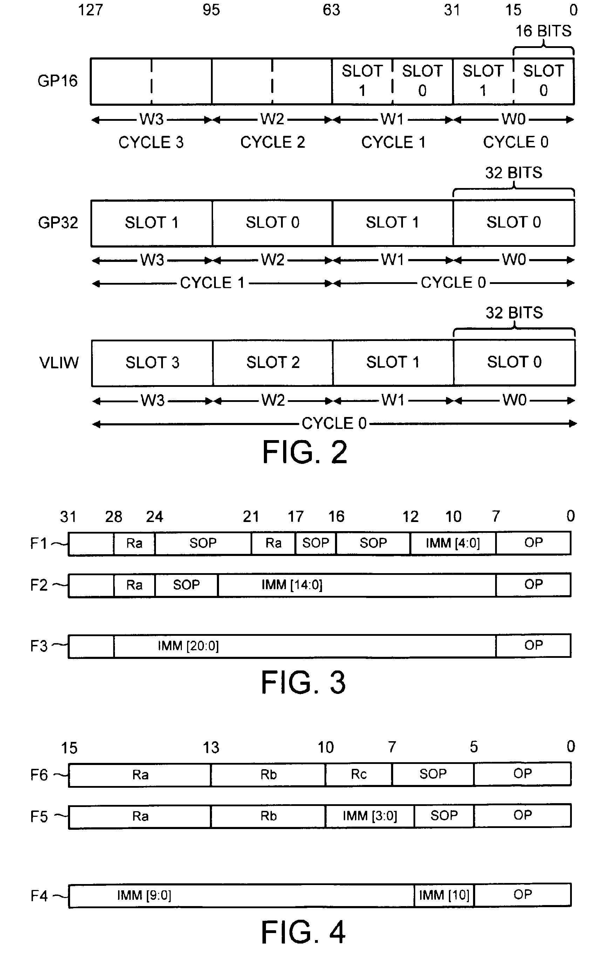

Figure 1 illustrates relevant components of a computer system arranged for the parallel execution of a plurality of instructions and particularly suited to provide a high digital signal processing (DSP) performance. A program memory 2 holds instructions in one of a number of different instruction formats. The instruction formats are described in more detail in the following, but, in brief, program code can be written in instructions of any one or a combination of GP16 format, GP32 format and Very Long Instruction Word (VLIW) format. Thus, individual instructions in the program memory 2 can have a length of 16 bits or 32 bits. The computer system supports three different instruction modes as described with reference to Figure 2 later. The instruction mode of the computer system is held in a process status register (PSR) 4 and is used to control operations of a prefetch buffer 6 and a decoder 8. A bypass mechanism 9 allows instructions to be supplied directly from the program memory 2 to the decoder 8 in some circumstances.

According to the instruction mode of the system, a number (2 or 4) of instructions are fetched from the program memory 2 either directly or via the prefetch buffer 6 and supplied to the decoder 8. Decoded instructions are supplied through a micro-instruction generator 10 which generates micro-instructions for a plurality of parallel execution units which are labelled EXU1, EXU2, EXU3, EXU4 and EXU5 in Figure 1. Each execution unit is arranged as an execution pipeline and are arranged to have particular functions as follows. Execution units EXU1,EXU2 are data units which are arranged to execute micro-instructions carrying arithmetic operations. They are also labelled DU1 and DU0 for reasons which are explained later. They share a common data register file 12. The execution units EXU3,EXU4 are address units and are used to execute micro-instructions for memory accesses to a data memory (not shown). They are also labelled AU1,AU0 for reasons which are explained later. The address units share a common pointer register file 14. The remaining execution unit EXU5 is a general unit (GU) which share some resources with the address units but which includes its own control register file 16. A load data queue LDQ and pointer data queue PDQ provides a queuing mechanism for data and pointers from the data memory to the register files 12,14,16. A store address/data queue SAQ/SDQ provides a queuing mechanism for data and addresses awaiting access to memory. A data data queue DDQ allows queuing of data being transferred between the register files 12,14,16.

The data units, address units and general unit are fed from instruction queues which receive micro-instructions from the micro-instruction generator 10. Micro-instructions are generated µslot 0, µslot 1 for the data units DU0,DU1 respectively and these micro-instructions are held in the instruction data queue D-IDQ in readiness for supply to the pipelined units DU0,DU1. Likewise, micro-instructions are generated in µslot 0 and µslot 1 for the address units and general unit AU1, AU0, GU. These micro-instructions are held in an instruction data queue A-IDQ for the address units.

The prefetch buffer 6, decoder 8, micro-instruction generator 10 and instruction queues D-IDQ, A-IDQ constitute a control unit for the computer system which operates in a pipelined manner. The stages of the pipeline are marked using dotted lines in Figure 1 and are denoted as follows:
AL - align stage
DE - decode stage
DP - dispatch stage.

Similarly, each of the execution units are pipelined, although the details of the pipelining are not given here. The first stage in each pipeline however is an operand fetch (OF) stage which provides operands for use by the instructions in execution by the execution units.

The micro-instruction generator 10 dispatches micro-instructions to the queues D-IDQ, A-IDQ in a format which depends on the execution unit for which the micro-instructions are intended. Thus, there is a micro-instruction format for the data units, a micro-instruction format for the address units and a micro-instruction format for the general unit. In the present case, the format for the address unit and general unit are sufficiently similar that they are described as a common format herein. Micro-instructions are generated in these formats, independently of the instruction mode used to write the program code. In order to understand this, the three different instruction modes of the machine will firstly be described with reference to Figure 2.

According to a first instruction mode, a pair of 16 bit instructions are supplied during each machine cycle to the decoder 8 from the prefetch buffer 6. This pair is denoted slot0, slot1 in bit sequences w0,w1 etc. This is referred to herein as GP16 superscalar mode.

According to a second instruction mode, two instructions each having a length of 32 bits are supplied to the decoder from the prefetch buffer in each machine cycle, for example w0,w1 in CYCLE 0. This mode is referred to herein as GP32 superscalar mode.

According to a third instruction mode, four instructions w0,w1,w2,w3 each of 32 bits in length are supplied to the decoder in each machine cycle. This is referred to herein as VLIW mode.

In all modes, each fetch operation initiated to the program memory 2 retrieves an instruction word of 128 bits in length. Thus, in GP16 mode, the instruction word comprises eight 16 bit instructions, paired as slot0,slot1 for each machine cycle. In GP32 and VLIW mode, the instruction word comprises four 32 bit instructions.

Thus, decoded instructions supplied from the decoder 8 to the micro-instruction generator 10 are supplied by four possible channels, labelled slot0,slot1,slot2 and slot3. Slot2 and slot3 will only be used in VLIW mode. It will be appreciated that each program instruction can give rise to a number of micro-instructions depending on the nature of the program instruction. Moreover, a single program instruction can give rise to micro-instructions for both the data unit(s) and the address unit(s)/general units.

For instructions other than the special category of expanded instructions discussed herein, in GP16 and GP32 mode, only slot0 and slot1 are used during each machine cycle. These are used to generate micro-instructions in µslot 0 and µslot 1 of either the data units or the address units/general unit. An instruction in slot 0 can give rise to a micro-instruction in µslot 0 of the data units and/or µslot 0 of the address units. Similarly, an instruction in slot 1 can give rise to instructions in µslot 1 of the data units and/or address units. Expanded instructions can generate a series of micro-instructions on both slots.

In VLIW mode, slots 0 and 1 are used to generate micro-instructions for µslot 0 and µslot 1 of either the A-IDQ or the load/store part of the D-IDQ, and slots 2 and 3 are used to generate micro-instructions for µslot 0 and µslot 1 of the operative part of the D-IDQ. For programs written in VLIW mode, a grammar has to be followed such that only certain 32 bit instructions can be placed as part of the combination of four instructions to be fetched and decoded simultaneously. Thus, it is not possible to generate from a single VLIW word of four 32 bit instructions four instructions requiring use of the data unit. The most micro-instructions that can be generated from a single VLIW word are two micro-instructions requiring the parallel data units and two micro-instructions requiring the parallel address units or general unit.

Table I gives some examples of types of operations defined by program instructions and the nature of micro-instructions that are generated for the data units, address units and general unit to implement those instructions.

**TABLE 1**

| **Operation** | **Instruction** | **Explanation** | **Microinstruction** | | |
|---|---|---|---|---|---|
| | | | **DU** | **AU** | **GU** |
| Data unit operation | DUop | DUop requires only DU | DUop | - | - |
| Address unit/Gene ral unit operation | PRArith | PRArith requires only AU | - | PRArith | - |
| | branch | branch requires only GU | - | - | branch |
| Load operation | Load DR | AU send the effective address to the Data Memory Interface. DU read the returned data from the LDQ and update the Data Register. | read LDQ RN = LDQ | EA→DMC | |
| | Load PR/CR | AU send the effective address to the Data Memory Interface. Then, AU read the returned data from the LDQ and update the Pointer Register. | - | EA→DMC PR/CR=LDQ | - |
| Store operation | Store DR | AU send the effective address to the Data Memory Interface. DU send the data to the SDQ. | Rn→SDQ | EA,BE→SAQ | - |
| | Store PR/CR | AU send the effective address to the Data Memory Interface. AU send the data from the SDQ. | - | PR/CR→SDQ | - |
| Register to Register Move | Pm=Rn | AU send the Data to the DDQ. AU read the data from the DDQ and update the Pointer Register. | Rn→DDQ | Pm=DDQ | |
| | Rm-Pn | AU send the Data to the PDQ. DU read the data from the PDQ and update the Data Register. | Rm=PDQ | Pn→PDQ | |

Figure 3 illustrates three exemplary formats for instructions in GP32 mode. Each instruction has a length of 32 bits, and a number of different fields depending on the format type. The three format examples are labelled F1,F2 and F3 in Figure 3. All the formats share an 8 bit opcode field at bits 0 to 7. The formats F1,F2 and F3 each have a field for holding a so-called immediate value IMM. The immediate value IMM can have a variable length, as indicated for example as 5 bits in format F1, 15 bits in format F2 and 21 bits in format F3. The length of the immediate value is held in the opcode or sub-opcode. Depending on the length of the immediate value, remaining fields denote for example destination and source registers, Ra,Rb and additional sub-op fields SOP for holding additional parts of the opcode of the instruction beyond that which can be held in the 8 bit field at bits 0 to 7. Bits 28 to 31 hold guard values for use in guarded instruction execution which is not discussed herein.

Figure 4 illustrates three exemplary instruction formats F4,F5 and F6 for GP16 mode. The formats share a 6 bit opcode field at bits 0 to 5. An immediate value IMM of varying length can be accommodated by the different formats, as illustrated in formats F4,F5. In addition there are fields for defining source and destination registers Ra,Rb,Rc for example, and additional sub-op fields SOP for expanding the opcode of the instruction, labelled SOP.

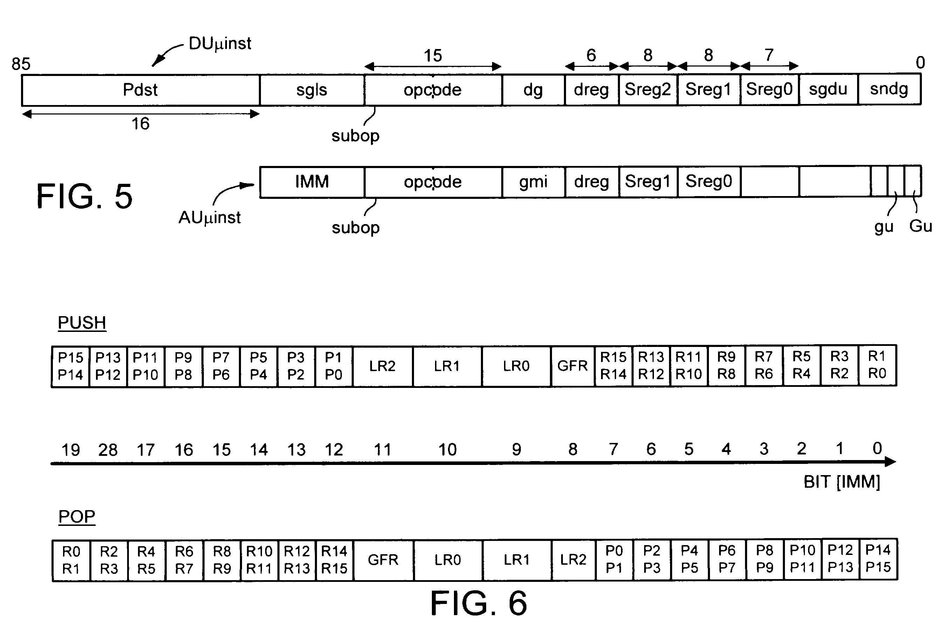

Figure 5 illustrates formats for the data unit micro-instruction and address unit micro-instruction. As already mentioned, the format for the address unit micro-instruction is very similar to that of the general unit micro-instruction, the latter not therefore being described further herein.

The data unit micro-instruction has a length of 86 bits containing a plurality of different fields of fixed length. Reading from right to left in Figure 5, the first, second, seventh and ninth fields hold parameters relating to guarded instruction execution which is not discussed herein. The third field is a 7 bit field holding a register value Sreg0. The fourth and fifth fields are each 8 bit fields holding register values Sreg1,Sreg2 respectively. Each of these three fields can effectively define source registers for the micro-instruction. The sixth field is a 6 bit field defining a data register. The eighth field is a 15 bit field holding the opcode defining the nature of the micro-instruction. This has a separately definable subop section having a length of 9 bits. The last field is a load/store field which is 16 bits long and which identifies criteria for performing load or store operations as outlined in Table I.

Note that the data unit micro-instruction has no dedicated field for holding the size and signage of an immediate value IMM. These parameters are held in the opcode and sub-opcode fields.

The address unit micro-instruction AUµinst similarly has fixed length (7 bits) fields for defining two source registers Sreg0,Sreg1 and an 8 bit field defining a data register dreg. A 19 bit opcode field includes a fixed length (10 bits) separately identifiable sub-opcode field SUBOP. The remaining fields relate to guarded instruction execution. Also, the first two bits of the micro-instruction indicates whether it is an address unit or general unit micro-instruction. These bits are labelled au and gu in Figure 5. The address unit micro-instruction format has a dedicated fixed length field (IMM - 5 bits) for holding bits identifying the size and signage of an immediate value. Note there are no fields uniquely dedicated to holding the immediate value itself.

The decoder 8 receives instructions in GP16, GP32 or VLIW mode and decodes them to supply data to the micro-instruction generator 10. The micro-instruction generator 10 uses this data to fill the fields according to the predetermined micro-instruction formats illustrated in Figure 5 to generate micro-instructions for µslot 0, µslot 1 of the data units or address units/general unit respectively. As mentioned earlier, each program instruction can give rise to one or more micro-instruction. Moreover, the micro-instruction format is the same regardless of the instruction mode.

In one arrangement not discussed further herein immediate values constitute operands which are supplied to the execution units. In the present embodiment however the use of the immediate value is in certain instructions held in the program memory 2 which are to be expanded into a series of stores or loads. The registers to be stored or loaded are defined in the immediate value. This is done in accordance with the masks of Figure 6. That is, each bit between 0 and 19 of the immediate value will be set according to the registers to be stored or loaded. A part of the ldst field in the DU micro-instruction is defined as ldst-ptr which is set at 0x0 when the register from the R0 sequence are to be loaded/stored and 0x1 when registers from the R1 sequence are to be loaded/stored.

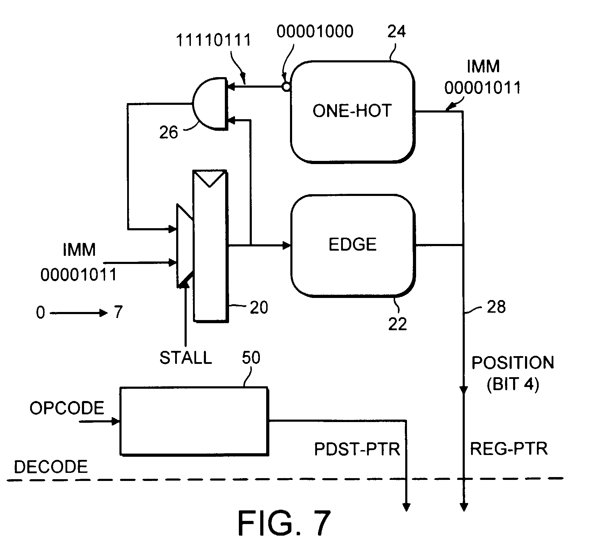

The examples given herein of so-called expanded instructions are PUSH and POP instructions. These instructions are detected at the decoder 8 as "expanded instructions" by their opcode, and the decoder 8 dispatches a sequence of load or store instructions in the relevant slots to be converted to micro-instructions for the relevant execution units. Each load or store instruction identifies a different register to be loaded or stored. This is done using the circuitry of Figure 7 which is located in the decoder 8. The circuitry of Figure 7 comprises an input circuit 20 which supplies an immediate value IMM to an edge detector 22. A one-hot circuit 24 receives the immediate value from the edge detector 22 and supplies a bit sequence to an AND gate 26 which receives as its other input the output of the input circuit 20. The output of the AND gate 26 is connected as an alternative input to the input circuit 20. An exemplary bit sequence for the immediate value IMM is given as 0001011. The edge detector 22 examines the sequence from bit 0 onwards, and detects the first edge in the sequence which in this particular instance will be at the beginning of bit 4. This is output on the position output 28 of the circuit and is used to define the relevant register for generation of the load or store instruction. For example, for a PUSH instruction bit 4 denotes register R8 or R9, and for a POP instruction, it denotes registers P6 or P7. The position value is held in a part of the relevant sreg or dreg field of the micro-instruction defined as reg-ptr Registers R8 and R9 are to be found in the data register file 12 and registers P6,P7 are to be found in the pointer register file 14. The one-hot circuit 24 generates a bit sequence which includes a one in the first detected position where a one occurs in the immediate value IMM, and zeros in all other positions. Thus, for the detected bit at bit 4, the one-hot sequence is illustrated in Figure 7 as 0001000. This is inverted and presented to the AND gate 26 as 1110111. By performing a binary AND using the AND gate 26 of this bit sequence with the original immediate value, the detected bit 1 at bit position 4 is thus removed from the subsequent input to the input circuit 20. Therefore, on the next pass round the circuit, the edge detector 22 looks for the next bit position, which in this particular instance is in bit position 6. The sequence is then continued. The register defined in each case by the located bit position as output on the position line 28 is supplied by the decoder 8 in the relevant slot to the micro-instruction generator for use in generation of the micro-instructions for execution by the execution units. Thus, a single instruction can be used to provide a plurality of micro-instructions, each defining different register values. Note that the decode also includes an opcode decode block 50 which generates the ldst-ptr value defining the sequence of registers to which the position value applies.

## Claims

1. A computer system comprising:
a plurality of registers for holding data items;
a memory holding a computer program consisting of a sequence of instructions, at least some of said instructions being expanded instructions which include a command identifier and a bit sequence acting as a register mask;
a decoder arranged to receive said instructions and to generate a sequence of similar commands from each expanded instruction, the nature of the command being defined by the command identifier and each command in the sequence identifying a different one of said register derived from the register mask; and
a plurality of parallel execution units operable to perform register manipulations responsive to said commands.

2. A computer system according to claim 1, wherein the decoder comprises a bit position detection circuit which includes an edge detector for detecting the position of a first "1" bit in the bit sequence and outputting that position to identify said registers.

3. A computer system according to claim 2, wherein the decoder comprises circuitry for removing from the bit sequence each first "1" bit after it has been detected and supplying to the edge detector a new bit sequence from which the last detected first "1" bit has been removed.

4. A computer system according to claim 3, wherein the bit removing circuitry comprises a one-hot circuit and an AND gate, the AND gate receiving as one input an inverted output from the one-hot circuit and as the other input the last bit sequence in which the first "1" bit was detected.

5. A computer system according to any preceding claim, which comprises a micro-instruction generator for generating micro-instructions for the plurality of parallel execution units, each micro-instruction embodying the command defined by the command identifier and the register derived from the register mask.

6. A computer system according to any preceding claim, wherein the command causes a data item held in a register to be stored in said memory.

7. A computer system according to any one of claims 1 to 5, wherein the command causes a data item held in the memory to be loaded into said registers derived from the register mask.
